(19) Europäisches Patentamt

European Patent Office

Office européen des brevets

(11) **EP 1 131 664 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **G02B 21/00**

(21) Anmeldenummer: **99962046.1**

(86) Internationale Anmeldenummer:
**PCT/DE99/03527**

(22) Anmeldetag: **05.11.1999**

(87) Internationale Veröffentlichungsnummer:
**WO 00/031576 (02.06.2000 Gazette 2000/22)**

(54) **VERFAHREN ZUR EINSTELLUNG DER SYSTEMPARAMETER EINES LASERSCANMIKROSKOPS**

METHOD FOR ADJUSTING THE SYSTEM PARAMETERS OF A LASER SCANNING MICROSCOPE

PROCEDE POUR REGLER LES PARAMETRES DE SYSTEME D'UN MICROSCOPE A BALAYAGE LASER

(84) Benannte Vertragsstaaten:
**AT BE CH CY DE DK ES FI FR GB GR IE IT LI LU MC NL PT SE**

(30) Priorität: **19.11.1998 DE 19853407**

(43) Veröffentlichungstag der Anmeldung:
**12.09.2001 Patentblatt 2001/37**

(73) Patentinhaber: **Leica Microsystems Heidelberg GmbH**
**69120 Heidelberg (DE)**

(72) Erfinder:
• ENGELHARDT, Johann
D-76669 Bad Schönborn (DE)
• SCHREIBER, Frank
D-65779 Kelkheim (DE)

(74) Vertreter: **Reichert, Werner F., Dr.**
**Leica Microsystems AG,**
**Konzernstelle Patente + Marken,**
**Postfach 20 20**
**35530 Wetzlar (DE)**

(56) Entgegenhaltungen:
WO-A-95/19552          WO-A-98/28655
DE-A- 19 654 211

• "Very High Magnification Optical Laser Microscope" SOLID STATE TECHNOLOGY, Bd. 29, Nr. 4, April 1986 (1986-04), Seiten 67-68, XP002132755 Wahington, New York, USA

• BREITMEIER U: "LICHTRASTERMIKROSKOPIE ZUR FLAECHIGEN BEURTEILUNG VON OBERFLAECHEN" MICROTECNIC,CH,AGIFA VERLAG S.A. ZURICH, Nr. 3, 1. Januar 1992 (1992-01-01), Seiten 28-31, XP000312362 ISSN: 0026-2854

• MOORE C J L ET AL: "A SPATIALLY RESOLVED SPECTRALLY RESOLVED PHOTOLUMINESCENCE MAPPING SYSTEM" JOURNAL OF CRYSTAL GROWTH,NL,NORTH-HOLLAND PUBLISHING CO. AMSTERDAM, Bd. 103, Nr. 1 / 04, 2. Juni 1990 (1990-06-02), Seiten 21-27, XP000148174 ISSN: 0022-0248

• TREPTE O ET AL: "COMPUTER CONTROL FOR A GALVANOMETER SCANNER IN A CONFOCAL SCANNING LASER MICROSCOPE" OPTICAL ENGINEERING,US,SOC. OF PHOTO-OPTICAL INSTRUMENTATION ENGINEERS. BELLINGHAM, Bd. 33, Nr. 11, 1. November 1994 (1994-11-01), Seiten 3774-3780, XP000475121 ISSN: 0091-3286

• "SCANNED PROBE MICROSCOPE WORKSTATION" IBM TECHNICAL DISCLOSURE BULLETIN,US,IBM CORP. NEW YORK, Bd. 38, Nr. 12, 1. Dezember 1995 (1995-12-01), Seiten 117-122, XP000588089 ISSN: 0018-8689

• PATENT ABSTRACTS OF JAPAN vol. 1999, no. 12, 29. Oktober 1999 (1999-10-29) & JP 11 183806 A (NIKON CORP), 9. Juli 1999 (1999-07-09)

**Beschreibung**

Die Erfindung betrifft ein Verfahren zur Einstellung der Systemparameter eines konfokalen Laserscanmikroskops, wobei die Einstellung der Systemparameter über einen Steuercomputer erfolgt.

Die Erfindung bezieht sich auf den Bereich der Laserscanmikroskopie, insbesondere auf den Bereich der konfokalen Laserscanmikroskopie. Laserscanmikroskope sind seit Jahren aus der Praxis bekannt. Lediglich beispielhaft wird hierzu auf die DE 196 54 211 A1 verwiesen. Konfokale Laserscanmikroskope erfordern vom Anwender hinreichende Kenntnis über die Bedienung eines solchen Laserscanmikroskops, nämlich zur Einstellung der voneinander abhängigen und oftmals auch einander entgegenwirkenden bzw. einander ausschließenden Systemparameter. Dazu gehören der Pinholedurchmesser, die Hochspannung des Photomultiplier (PMT), die Laserleistung, etc. Zur optimalen Einstellung der Systemparameter, insbesondere unter Berücksichtigung objektspezifischer Eigenschaften, muss der Benutzer auf seine Erfahrungen mit dem Umgang solcher Laserscanmikroskope zurückgreifen. Jedenfalls ist es für einen Benutzer bislang kaum möglich gewesen, optimale Aufnahmeergebnisse ohne umfassende einschlägige Erfahrung erzielen zu können.

Insbesondere im Hinblick auf die quantitative konfokale Laserscanmikroskopie ist eine Beurteilung der aufgenommenen Bilddaten bzgl. der Datenqualität ein wichtiges Kriterium. Qualitätsmerkmal der Datenaufnahme kann beispielsweise das Signal-Rausch-Verhältnis oder die erzielte Auflösung sein. Daher ist eine optimale Daten-Aufnahmestrategie Voraussetzung für die erfolgreiche quantitative konfokale Laserscanmikroskopie in der breiten Anwendung.

Aufgrund der voranstehend genannten Komplexität bei der Einstellung konfokaler Laserscanmikroskope werden die Betriebs- bzw. Systemparameter bei Laserscanmikroskopen von zahlreichen Benutzern nicht optimal eingestellt. Vor allem die Unkenntnis der teilweise sehr komplizierten Zusammenhänge verschiedener optischer und elektronischer Randparameter eines konfokalen Laserscanmikroskops sind die Ursache für eine bislang unzureichende Bedienung. Erfolgt die Einstellung eines solchen Laserscanmikroskops aber nicht optimal, so lässt sich eine Bildaufnahme nur mit reduzierter Bildqualität oder einer viel zu langen Einstellungsprozedur vor der eigentlichen Bildaufnahme vornehmen. Eine zu lange Einstellungsphase vor der eigentlichen Bildaufnahme reduziert jedoch die Effizienz eines solchen Mikroskops und führt meist zu einem übermäßigen Verschleiß der Laserlichtquelle und/oder der mit dem Laserlicht beaufschlagten Lichtleitfasern sowie möglicherweise zu einer Beeinträchtigung der Probe.

Die bislang aus der Praxis bekannten Laserscanmikroskope sind insbesondere auch beim Einlernen neuer Benutzer problematisch, da stets Anweisungen und Hilfestellungen erfahrener Benutzer erforderlich sind. Jedenfalls ist es bislang schwierig, die optimale Nutzung eines Laserscanmikroskops autodidaktisch zu erlernen. Vielmehr ist bei bisherigen Laserscanmikroskopen eine äußerst lange Einlernphase mit der Hilfestellung erfahrener Benutzer zwingend erforderlich.

Ein weiteres Problem aus der bisherigen Praxis ist darin zu sehen, dass zahlreiche Fluoreszenzobjekte mit sehr langen Einstellungsphasen ausbleichen. Da jedoch lange Einstellungsphasen meist nicht auszuschließen sind, ist die Anwendung der aus der Praxis bislang bekannten Laserscanmikroskope insbesondere bei biologischen Proben eingeschränkt und insoweit problembehaftet. Grundsätzlich gilt es daher, die Zeitdauer zur optimalen Einstellung ganz erheblich zu reduzieren.

Angesichts der voranstehend genannten Probleme liegt der vorliegenden Erfindung die Aufgabe zugrunde, ein Verfahren zur Einstellung der Systemparameter eines vorzugsweise konfokalen Laserscanmikroskops anzugeben, wobei die Einstellung der Systemparameter über einen Steuercomputer erfolgt. Mit diesem Verfahren soll eine sichere und dabei reproduzierbare Einstellung des Laserscanmikroskops möglich sein, und zwar unter Berücksichtigung vorgebbarer System-/ Objektparameter.

Das erfindungsgemäße Verfahren löst die voranstehende Aufgabe durch die Merkmale des Patentanspruches 1.

Erfindungsgemäß ist erkannt worden, dass eine Reduzierung der zur optimalen Einstellung erforderlichen Zeit nur dann - sinnvoll und dabei reproduzierbar - möglich ist, wenn eine Benutzerführung im Dialog auf der Grundlage der physikalischen Zusammenhänge bzw. der Formeln aus dem Anhang erfolgt. Mit anderen Worten verfügt der Steuercomputer über eine entsprechende Software, die im Dialog eine Benutzerführung generiert. Auf Eingabe mindestens eines Objektparameters und/oder gegebenenfalls eines auswählbaren Systemparameters werden dem Benutzer Einstellungen der übrigen Systemparameter vorgeschlagen. Nach Auswahl oder - ebenfalls wahlweise - automatisch werden die übrigen Systemparameter unter Zugrundelegung des softwaremäßigen Vorschlags eingestellt. Dabei ist wesentlich, dass im Dialog grundsätzlich eine quasi optimale Einstellung der Systemparameter vorgeschlagen wird. Je nach Auswahl eines einzelnen Systemparameters oder mehrerer Systemparameter werden die anderen Systemparameter auf die getätigte Auswahl angepasst und erfolgt im Rahmen der Vorgabe bzw. der Vorgaben eine weiterreichende Optimierung. Gleiches gilt hinsichtlich der Objektparameter.

In vorteilhafter Weise umfasst das erfindungsgemäße Verfahren die Möglichkeit, wonach auf Eingabe mindestens eines Objektparameters und/oder eines gegebenenfalls auswählbaren Systemparameters und/ oder mindestens einer definierbaren Problemstellung betreffend die Bildaufnahme und/oder betreffend das aufzunehmende Objekt Optimierungspfade zur Systemeinstellung und/oder Aufnahmestrategien vorgeschlagen werden. Insoweit umfasst die Benutzerführung ein quasi intelligentes System bzw. eine entsprechende Datenbank, die nach Vorgabe einzelner Objekt-/Systemparameter oder nach Vorgabe einer spezifischen Problemstellung Optimierungspfade zur Systemeinstellung bzw. Aufnahmestrategien vorschlägt. Der Benutzer kann dann unter Zugrundelegung seiner Vorgaben eine für seinen Bedarf optimale Aufnahmestrategie auswählen.

Die vorgebbaren Systemparameter einer ausgewählten Systemeinstellung oder Aufnahmestrategie können - wahlweise - automatisch über die Benutzerführung eingestellt werden, und zwar vorzugsweise nach einer vom Benutzer einzugebenden Bestätigung. Eine Sicherheitsabfrage kann dabei vorgesehen sein.

Im Dialog lassen sich zahlreiche Objekt-/Systemparameter (vor-)auswählen. Dazu gehören beispielsweise die aufzunehmende Objektdimension, der aufzunehmende Objektbereich, die Anzahl der optischen Schnitte in bzw. durch ein Objekt, die aufzunehmende Objekteigenschaft, die Nachweismethode, etc. Bei den in Frage kommenden Nachweismethoden kann es sich um die Anwendung des Fluoreszenzverfahrens und des Reflexionsverfahrens handeln. An dieser Stelle sei angemerkt, dass die Vorgabe der voranstehend genannten Parameter mittels freier Eingabe oder per Auswahl aus einem vorgegebenen und gegebenenfalls vom Benutzer erweiterbaren Menü erfolgen kann.

Des weiteren ist es möglich, dass im Dialog die die Vorrichtung betreffenden Parameter auswählbar bzw. vorgebbar sind. So könnte die Verwendung eines geeigneten Objektivs mit möglichst hoher numerischer Apertur zur Erzielung maximaler Auflösung vorgeschlagen werden, und zwar unter Zugrundelegung bereits ausgewählter System-/Objektparameter. Außerdem könnte im Dialog die mit dem ausgewählten Objektiv maximal erzielbare Auflösung mitgeteilt werden. Unter Zugrundelegung bereits ausgewählter bzw. ermittelter und gegebenenfalls bereits eingestellter Systemparameter könnte die aktuell erreichbare Auflösung mitgeteilt werden, um nämlich überprüfen zu können, ob diese Auflösung unter Zugrundelegung der vorgegebenen Systemparameter auch tatsächlich ausreicht. Insoweit könnte die Benutzerführung alternative Voreinstellungen vorschlagen, nämlich zum Erreichen einer höheren Auflösung.

Ebenso ist es denkbar, dass im Dialog die Anzahl der Pixel pro Bildebene vorgeschlagen wird.

Die im Dialog einzugebende oder auszuwählende Objekteigenschaft dient zur Ermittlung der optimalen Bestrahlungsstärke, die ebenfalls im Dialog zur Einstellung vorgeschlagen wird. Die optimale Bestrahlungsstärke bzw. Laserleistung - ebenfalls unter Zugrundelegung vorgebbarer System-/Objektdaten - wird ebenfalls im Dialog vorgeschlagen. Des weiteren ist es denkbar, dass die optimale Bestrahlungsstärke bzw. Laserleistung automatisch - gegebenenfalls nach Freigabe durch den Benutzer - eingestellt wird.

Zur Einstellung des Detektionspinhole-Durchmessers wird im Dialog ein optimaler Wert vorgeschlagen, bei dem die Auflösung der Bildaufnahme bei noch brauchbarem Signal-zu-Rausch-Verhältnis der Bildaufnahme maximal ist. Ebenso ist es denkbar, dass zur Einstellung des Detektionspinhole-Durchmessers ein optimaler Wert im Dialog vorgeschlagen wird, bei dem das Signal-zu-Rausch-Verhältnis der Bildaufnahme bei noch brauchbarer Auflösung der Bildaufnahme maximal ist.

Wie bereits zuvor erwähnt, bietet die in erfindungsgemäßer Weise vorgesehene Benutzerführung ganz erhebliche Vorteile und Erleichterungen. So in weiter vorteilhafter Weise auch dahingehend, dass bei Vorgabe oder Veränderung mindestens eines Systemparameters im Dialog all diejenigen Systemparameter mitgeteilt werden, die durch die Vorgabe oder Veränderung beeinflusst werden. Mittels der Benutzerführung kann im Dialog mitgeteilt werden, wie unter Zugrundelegung der Vorgabe oder Veränderung von Parametern eine Bildaufnahme mit bestmöglicher Bildqualität realisierbar ist. Insoweit lassen sich vom Benutzer verschiedene Optimierungspfade auswählen, und zwar unter Zugrundelegung vorgegebener Objekt-/Systemparameter und unter Zugrundelegung geänderter Objekt-/Systemparameter.

In ganz besonders vorteilhafter Weise, insbesondere im Hinblick auf besondere Aufnahmetechniken bzw. im Hinblick auf bestimmte Applikationen, ist es von ganz besonderem Vorteil, wenn mindestens ein für die Aufnahme bzw. Applikation wichtiges Kriterium zu dessen Optimierung vorgebbar ist. Aufgrund dieser Vorgabe werden dann im Rahmen der Benutzerführung die weiteren Systemparameter im Dialog vorgeschlagen und/oder - möglicherweise nach Abfrage und benutzerseitiger Bestätigung - automatisch eingestellt. Bei dem vorgegebenen Kriterium könnte es sich beispielsweise um das zu erzielende Signal-zu-Rausch-Verhältnis handeln. Die Vorgabe anderer Kriterien ist ebenso möglich, wobei eine Anpassung der übrigen Systemparameter - darauf hin - stattfindet.

Mittels Benutzerführung könnten im Dialog Hilfestellungen oder Lösungen für vorgegebene Problemsituationen angeboten werden. Bei den Problemsituationen könnte es sich um unterschiedliche Problemfälle handeln, so beispielsweise um den Problemfall, wonach die Probe (bei Fluoreszenzobjekten) zu stark bleicht, wonach die Bilddaten zu "verrauscht" sind, wonach die Messzeit zu lange ist oder wonach die Auflösung der Bildaufnahme zu gering ist. Entsprechend dieser Problemsituation werden im Dialog Hilfestellungen bzw. Lösungen angeboten, die vom Benutzer unter Zugrundelegung voreingestellter Systemparameter auswählbar sind. Unter Zugrundelegung der im Dialog gelieferten Hilfestellungen ist die Optimierung - im Dialog - möglich.

Ebenso ist es denkbar, dass zumindest teilweise voneinander abhängige oder einander entgegenwirkende Systemparameter mittels Algorithmus bzw. anhand entsprechender Gleichungen bestimmt werden. Dabei kann es sich um Gleichungen gemäß Anhang handeln.

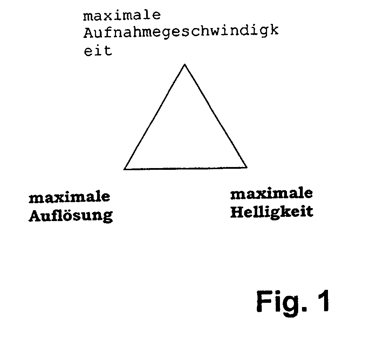

Des weiteren ist es denkbar, dass die Systemparameter unter Berücksichtigung sich gegenseitig ausschließender Eigenschaften bzw. Einstellungen im Dialog vorschlagen und nach Auswahl sowie gegebenenfalls nach Bestätigung automatisch eingestellt werden. Diese sich gegenseitig beeinflussenden oder gar ausschließenden Eigenschaften sind in Figur 1 im Sinne eines "Qualitätsdreiecks" dargestellt. Bei den sich gegenseitig ausschließenden bzw. einander entgegenwirkenden Faktoren handelt es sich um die maximale Auflösung, maximale Helligkeit und maximale Aufnahmegeschwindigkeit.

In besonders vorteilhafter Weise werden die Systemparameter unter Berücksichtigung der Vorgaben aus einem in der Datenbank abgelegten Expertensystem abgerufen, wobei dieses Expertensystem einerseits Erfahrungswerte und andererseits Algorithmen unter Berücksichtigung des Qualitätsdreiecks umfassen kann. Des weiteren ist es denkbar, dass die Systemparameter unter Berücksichtigung der Vorgaben unter Verwendung von Fuzzy-Logic ermittelt und nach Auswahl oder automatisch - gegebenenfalls nach Bestätigung durch den Benutzer - eingestellt werden, wobei Maßnahmen nach Fuzzy-Logic dem Expertensystem einverleibt sein können.

Die Benutzerführung könnte des weiteren derart ausgelegt sein, dass bei Vorgabe und/oder Änderung mindestens eines Systemparameters im Dialog mitgeteilt wird, dass und bejahendenfalls inwiefern die Bildaufnahme im Hinblick auf eine Eigenschaft der Bildaufnahme, so beispielsweise im Hinblick auf die Auflösung, das Sampling, etc. beeinflußt wird. Insoweit handelt es sich um ein "weitsichtiges" System zur Benutzerführung, wonach nämlich Auswirkungen in Bezug auf die Qualität mitgeteilt werden. Des weiteren ist es von Vorteil, wenn dem Benutzer vor, während und nach der Bildaufnahme eine Information hinsichtlich der Qualität der zu erzielenden Bildaufnahme vermittelt wird, um nämlich überprüfen zu können, ob die Bildqualität unter Zugrundelegung einerseits der ausgewählten und andererseits der vom System vorgegebenen Systemparameter ausreicht.

Die vom Benutzer eingestellten bzw. veränderten Aufnahme- bzw. Systemparameter könnten vom Aufnahmeprogramm analysiert werden. Falls ein oder mehrere Systemparameter vom Benutzer "falsch" eingestellt wurden, kann das Programm automatisch und in Eigeninitiative den Benutzer in einen Dialog führen, mit dem Ziel, eine optimale Systemeinstellung wiederherzustellen. Hierzu müßte ein "Qualitäts-Dämon-Modul" des Programms während der Benutzung laufend die aktuellen Systemparameter analysieren und bei nicht-optimaler Einstellung das Dialog-Modul automatisch aufrufen.

Schließlich könnte die Benutzerführung in ganz besonders vorteilhafter Weise, insbesondere zur Einführung neuer Benutzer, ein Lernprogramm im Dialog führen, wonach der Benutzer zu optimalen Aufnahmestrategien angeleitet wird, und zwar unter Zugrundelegung objekt- oder problemspezifischer Systemeinstellungen. Das im Dialog geführte Lernprogramm könnte auch als Trainingsprogramm für bereits erfahrene Benutzer ausgelegt sein, um nämlich die Arbeitsqualität der mit dem Fluoreszenzmikroskop arbeitenden Benutzer steigern zu können.

Gemäß Fig. 1 schließen sich drei Merkmale bei der konfokalen Laserscanmikroskopie gegenseitig aus, nämlich die maximale Aufnahmegeschwindigkeit, die maximale Auflösung und die maximale Helligkeit. Will ein Benutzer beispielsweise eine hohe Ortsauflösung erreichen, so ist ein langes Scannen erforderlich. Das so erhaltene Signal ist meist stark reduziert. Ebenso verhält es sich mit den anderen Größen, die in Fig. 1 im Rahmen des dortigen "Qualitätsdreiecks" dargestellt sind.

Bei der konfokalen Laserscanmikroskopie ist der Benutzer einer entsprechenden Vorrichtung grundsätzlich mit den folgenden Problemstellungen konfrontiert:

- die Probe bleicht bei Fluoreszenzobjekten zu stark,

- die Bilddaten sind "verrauscht",

- die Meßzeit ist zu lang und

- die Auflösung der Bildaufnahme ist zu gering.

Durch Anwendung des erfindungsgemäßen Verfahrens wird dem Benutzer eine Benutzerführung bzw. ein Computer-Dialog an die Hand gegeben, wonach je nach konkreter Anwendung eine optimale Systemeinstellung möglich ist und entsprechende Aufnahmestrategien vorgeschlagen werden und vom Benutzer auswählbar sind. Jedenfalls kann bei der Optimierung das in Fig. 1 gezeigte "Qualitätsdreieck" einbezogen werden.

Des weiteren werden dem Benutzer mit dem erfindungsgemäßen Verfahren Hilfsmittel zur Hand gegeben, die es ihm ermöglichen, in Form einer computergestützten Benutzerführung für alle nur denkbaren Problemstellungen, insbesondere für die vier vorgenannten häufigsten Problemstellungen, Lösungsvorschläge zu erhalten, und zwar auch unter Zugrundelegung auswählbarer Voreinstellungen. Sofern der Benutzerführung ein Expertensystem einverleibt ist, kann der Benutzer auf Erfahrungswerte verschiedenster mikroskopischer Anwendungen und Fragestellungen zurückgreifen. Dabei ist es wiederum denkbar, ein lernfähiges System zu realisieren, d.h. eine sich mit jeder positiv beschiedenen Bildaufnahme - automatisch oder nach ausdrücklicher Bestätigung seitens des Benutzers - erweiternde Datei. Verfahren wie "Fuzzy-Logic" können implementiert werden, woraus sich die Systemeinstellungen weiter optimieren lassen.

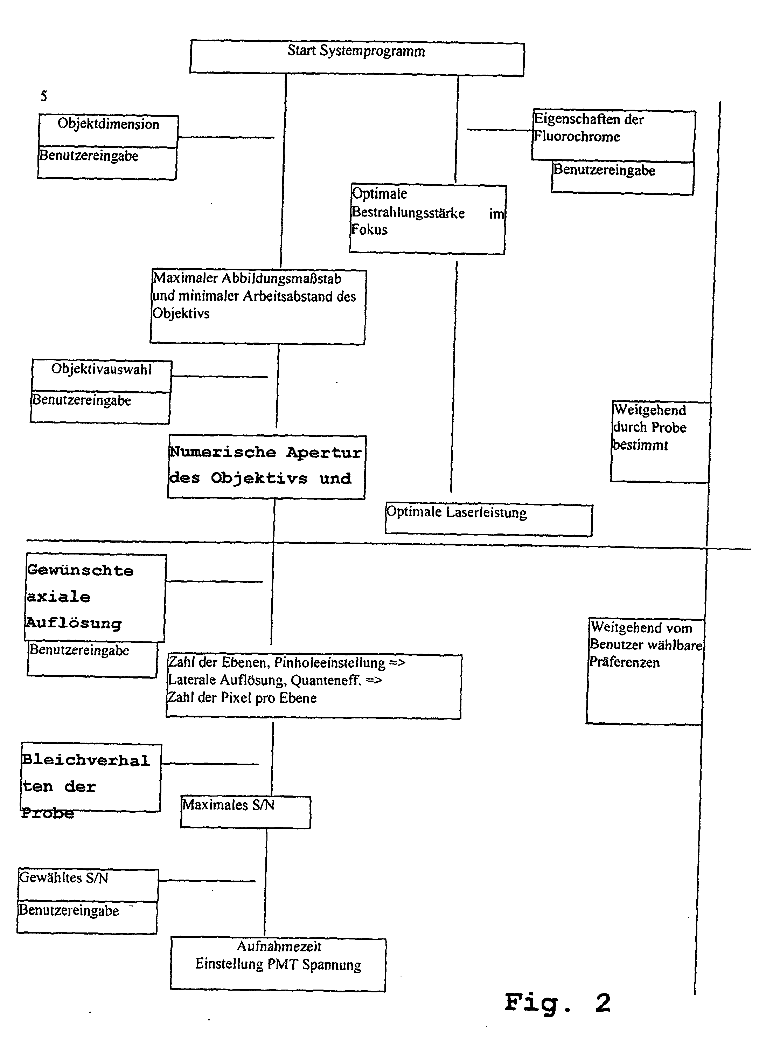

Hinsichtlich des Verfahrensablaufs und einer dort stattfindenden Optimierung wird unter Bezugnahme auf die voranstehenden Ausführungen auf Fig. 2 verwiesen.

Zur Verdeutlichung der beanspruchten Lehre sei nachfolgend ein konkretes Ausführungsbeispiel erläutert. Danach wird sich auf die bei bekannten Systemen zur Verfügung stehenden Einstellungsmöglichkeiten beschränkt. Die verwendete Probe ist ein mit Fluorescein gefärbter Drosophila Embryo. Dessen Abmessungen betragen lateral ca. 200 µm und axial ca. 100 µm. Die maximale Dichte $\rho$ der Farbstoffmoleküle und die Eigenschaften des verwendeten Farbstoffs, wie die Bleichrate $\Lambda$, die Lebensdauer des angeregten Singulett- bzw. Triplettzustandes $\tau_S$ bzw. $\tau_T$, die Wahrscheinlichkeit $W_T$ für den Übergang in den Triplettzustand, der Wirkungsquerschnitt $\sigma$ sowie die Emissions- und Anregungswellenlänge $\lambda_{Em}$ und $\lambda_{Ex}$, sind hinreichend genau bekannt:

| $\lambda_{Em}$ = 520 nm | $\lambda_{Ex}$ = 490 nm |
|---|---|
| $\tau_T = 10^{-6}$ s | $\tau_S = 4{,}5 \cdot 10^{-9}$ s |
| $\Lambda = 3 \cdot 10^{-5}$ | $W_T = 0{,}03$ |
| $\rho = 200\ \mu m^{-3}$ | $\sigma = 3{,}06 \cdot 10^{-16}$ cm$^2$ |

Um die optimale Anpassung des Systems an die zu untersuchende Probe und an die Benutzerforderungen zu gewährleisten, werden folgende Verfahrensschritte realisiert:

1. Wahl des zu verwendenden Objektivs. Dieses folgt direkt aus den Abmessungen der zu untersuchenden Probe. Aus der minimalen lateralen Auflösung folgt die einzustellende Pixelzahl pro Bildebene.

2. Bestimmung der optimalen Bestrahlungsstärke im Fokus aus der Aufnahmezeit und den Eigenschaften der Fluoreszenzmoleküle.

3. Berechnung der einzustellenden Laserleistung aus der Fokusfläche und der optimalen Bestrahlungsstärke im Fokus.

4. Bestimmung des Detektionspinhole-Radius als Kompromiss zwischen erwarteter Auflösung und erwartetem Signal-Rausch-Verhältnis im Bild. Die Zahl der optischen Schnitte folgt aus der axialen Auflösung.

5. Anpassung der Photomultiplier-Spannung an das zu erwartende Signal-Rausch-Verhältnis im Bild.

Für das konkrete Beispiel ergeben sich folgende Informationen:

1. Der maximale Abbildungsmassstab des Objektivs sollte 50 (10 mm / 200 µm) nicht überschreiten und dessen Arbeitsabstand sollte in der Größenordnung der Probendicke (0,1 mm) liegen. Die numerische Apertur (NA) ist unter diesen Nebenbedingungen maximal zu wählen. Man findet folgendes Objektiv:

$$M = 40, \qquad WD = 80\ \mu m, \qquad NA = 1{,}0.$$

Die laterale Auflösung des Mikroskops liegt mit dem gewählten Objektiv und unter Berücksichtigung der angegebenen Emissionswellenlänge der Fluoreszenzmoleküle zwischen 210 nm und 320 nm. Der genaue Wert ist abhängig vom eingestellten Pinhole-Radius. Unter Beachtung des Nyquist-Theorems beträgt die Zahl der pro Zeile aufzunehmenden Pixel $n_l$:

$$n_l = \frac{2}{r_{res}} \cdot 200 [mm]$$

und liegt somit zwischen 1920 und 1260. Beim verwendeten System kann die Pixelzahl im Bild auf die Werte $256^2$, $512^2$ oder $1024^2$ eingestellt werden. Im gegebenen Beispiel ist die maximale Pixelzahl von $1024^2$ zu wählen. Da diese Zahl unterhalb der nach Nyquist berechneten Werte liegt, kann es sein, dass Artefakte im Bild auftreten. Ist dies der Fall, muss entweder das Scanfeld mit Hilfe des Zooms verkleinert werden, oder ein Objektiv mit kleinerer numerischer Apertur verwendet werden.

2. Die Aufnahmezeit pro Pixel ergibt sich aus der Aufnahmezeit pro Bildebene und der Zahl der Pixel pro Bildebene. Es ist zu beachten, dass durch das Rücksetzen des Scanspiegels nach jeder Bildzeile nur ca. die Hälfte der Aufnahmezeit zur Detektion genutzt wird. Bei einer Aufnahmezeit pro Bildebene von ca. 2 Sekunden erhält man für die Aufnahmezeit pro Pixel ca. 1 µs; die für das Bleichen entscheidende Bestrahlungszeit pro Pixel beträgt ca. 2 µs.

Die Berechnung der optimalen Bestrahlungsstärke ergibt sich wie folgt:

$$E_S = \frac{1}{\sigma \cdot \tau_s} \approx 7{,}3 \cdot 10^{23}\ \frac{Photonen}{cm^2 \cdot s}$$

bzw.

$$E_T = \frac{1}{\sigma \cdot (\tau_s + W_T \cdot \tau_T)} \approx 9,5 \cdot 10^{22} \frac{\text{Photonen}}{\text{cm}^2 \cdot s}$$

Für den Fall, dass Triplettzustände vernachlässigt werden können, ergibt sich im konkreten Beispiel eine um Faktor 8 größere optimale Bestrahlungsstärke $E_S$. Die Vernachlässigung ist im Allgemeinen dann gerechtfertigt, wenn die Detektionszeit pro Pixel kleiner als die Lebensdauer des Triplettzustandes ist. Liegt die Detektionszeit in der Größenordnung der Lebensdauer des Triplettzustandes, wie im vorliegenden Beispiel, sollte deren Existenz bei der Berechnung der optimalen Bestrahlungsstärke berücksichtigt werden.

Es ist zu beachten, dass beide Werte auf der Erkenntnis beruhen, dass das beste Signal-Rausch-Vehältnis im Bild erreicht wird, wenn die Emissionsrate gleich der Anregungsrate der Fluoreszenzmoleküle ist. Grundsätzlich nähert sich das System diesem Gleichgewicht exponentiell an. Die Berechnung von $E_S$ ignoriert die Existenz der Triplettzustände und macht die Annahme eines Gleichgewichts zwischen angeregtem Singulett- und Grundzustand. Die Berechnung von $E_T$ geht von einem sofortigen Erreichen des Gleichgewichts zwischen allen drei Zuständen aus. Um während der gesamten Bestrahlungszeit ein Gleichgewicht zwischen Anregungs- und Emissionsrate zu erhalten, müsste die Bestrahlungsstärke in dieser Zeit exponentiell von $E_S$ nach $E_T$ streben. Beide Werte stellen also in jedem Fall eine mehr oder weniger gute Näherung dar.

3. Bei der benutzten Wellenlänge von 488 nm haben die Photonen eine Energie von ca. $4 \cdot 10^{-19}$ J. Die Fokusfläche $F_{Fokus} = \pi \cdot r_{Airy}^2$ beträgt ca. $2,8 \cdot 10^{-13}$ m². Damit erhält man einen Strahlungsfluß $\Phi$ von:

$$\Phi = h\nu \cdot E_T \cdot F_{Fokus} \approx 100 \ \mu W.$$

Da nur ca. 10% des eingekoppelten Strahlungsflusses in den Fokus des Objektivs gelangen, ist die Laserleistung auf ca. 1 mW einzustellen. Für den Fall, dass Triplettzustände vernachlässigt werden können - also bei kürzeren Aufnahmezeiten - ergibt sich für Fluorescein eine einzustellende Laserleistung von ca. 8 mW.

4. Die Zahl der benötigten optischen Schnitte erhält man aus der Dicke der Probe, dem axialen Auflösungsvermögen und dem Nyquist-Theorem. Da eine Einstellung des Detektions-Pinholes über 8 optische Einheiten zu einer schlechten Bildqualität führt, liegt die axiale Auflösung zwischen 0,6 $\mu$m und 1,8 $\mu$m. Die Zahl der optischen Schnitte liegt damit unter Ausnutzung des gesamten Arbeitsabstandes zwischen 270 und 90. Da nur mit einem einzigen Kanal detektiert wird, liegt die Größe des aufgenommenen Datensatzes damit zwischen 270 und 90 Megabyte. Evtl. kann die Zahl der optischen Schnitte an dieser Stelle auch praktisch durch den Arbeitsspeicher des Systems begrenzt sein.

Im allgemeinen strebt der Anwender nach dem maximalen axialen Auflösungsvermögen. Das Signal-Rausch-Verhältnis soll dabei eine bestimmte Schwelle nicht unterschreiten.

Bei einem eingestellten Detektionspinhole-Radius von ca. 2 optischen Einheiten erreicht das Mikroskop nahezu das maximale axiale Auflösungsvermögen. Das laterale Auflösungsvermögen beträgt ca. 260 nm.

Aus der axialen Auflösung $z_{res}$, der Dicke der Probe und dem Nyquist-Theorem erhält man die Zahl der aufzunehmenden Schnitte $n_z$:

$$n_z = \frac{2}{z_{res}} \cdot 80 \ mm = 270.$$

Aus der axialen Auflösung und der lateralen Auflösung erhält man unter der Annahme eines ellipsoid-förmigen Fokus das detektierte Pixelvolumen $V_{Pixel}$:

$$V_{Pixel} = \frac{4}{3} \cdot \pi \cdot z_{res} \cdot r_{res}^2 \approx 0,17 \ mm^{-3}.$$

Die maximale Dichte $\rho$ der Fluoreszenzmoleküle beträgt 200 Moleküle pro $\mu m^3$. Damit beträgt die Zahl der Moleküle im Fokus $N_{Fokus}$:

$$N_{Fokus} = \rho \cdot V_{Pixel} \approx 34.$$

Bei optimal eingestellter Bestrahlungsstärke ist die Emissionsrate $E_m$ gleich der Anregungsrate. Das heißt, im dynamischen Gleichgewicht befinden sich die eine Hälfte der Moleküle im Grundzustand und die andere im angeregten Zustand. Im vorliegenden Beispiel sind Triplettzustände nicht vernachlässigbar. Die Emissionsrate pro Molekül beträgt damit:

$$E_m = \frac{1}{2 \cdot (\tau_s + W_T \cdot \tau_T)} \approx 15 \ ms^{-1}.$$

Bei einer Detektionszeit von 1 $\mu$s werden damit pro Pixel ca. 510 Photonen emittiert. Da das System beim verwendeten Objektiv nur ca. 1% aller emittierten Photonen detektiert, erhält man für die detektierte Signalhöhe einen Wert von ca. 5 Photonen pro Pixel. Dies entspricht einem Signal-Rausch-Verhältnis (S/N) von ca.:

$$S/N \approx 2,3.$$

Liegt dieser Wert unterhalb der vom Anwender vorgegebenen Schwelle, muss auf Auflösung verzichtet werden. Damit steigt das detektierte Pixelvolumen und somit die Zahl der detektierten Photonen pro Pixel. Außerdem nimmt die Zahl der aufzunehmenden Schichten ab, was zu einem geringeren Ausbleichen der Probe führt.

Verzichtet man nicht zugunsten eines besseren Signal-Rausch-Verhältnisses auf Auflösung, bleibt die Zahl der optischen Schnitte bei 270. Das bedeutet, das die gesamte Probenfläche 270 mal für die Zeit von 2 μs der oben berechneten Bestrahlungsstärke ausgesetzt ist. Der Anteil der danach noch nicht gebleichten Moleküle $n/n_0$ beträgt:

$$\frac{n}{n_0} = \exp\left(-\Lambda \cdot \frac{270 \cdot 2\mu s}{2 \cdot (\tau_S + W_T \cdot \tau_T)}\right) \approx 0,8.$$

Da die Möglichkeit der Erhöhung der Aufnahmezeit mit der Zunahme der Bildschnitte im benutzten System nicht vorgesehen und technisch schwer zu realisieren ist, bewirkt das Ausbleichen der Probe, dass die Helligkeit der zuletzt aufgenommenen Schichten ca. 80% der zuerst aufgenommenen Schichten beträgt. Das Signal-Rausch-Verhältnis wird auf ca. 2 reduziert.

5. Wird auch dieses Signal-Rausch-Verhältnis vom Anwender akzeptiert, ist nur noch die Photomultiplier-Spannung an die maximal zu erwartende Signalhöhe von ca. 5 Photonen pro Pixel anzupassen. Für die gegebene Aufnahmezeit pro Pixel ergibt sich eine Photomultiplier-Spannung von ca. 720 V.

Es ist zu bemerken, dass die verwendete Probe eine verhältnismäßig hohe Dichte an Fluoreszenzmolekülen aufweist. In der Praxis kann es vorkommen, dass Proben mit weniger als 10 Molekülen pro μm³ betrachtet werden. Um ausreichende Aufnahmequalitäten zu erzielen, muss in solchen Fällen über mehrere Messungen gemittelt werden.

Die Lebensdauer des Triplettzustandes kann durch die Anwesenheit von z.B. Sauerstoff reduziert werden, oder liegt bei vielen Farbstoffen schon im isolierten Zustand unter der des Fluorescein-Triplettzustandes. Im vorliegenden Beispiel bewirkt eine Verkürzung der Lebensdauer der Triplettzustände eine Erhöhung der optimalen Bestrahlungsstärke, höhere Emissionsraten und damit auch ein besseres Signal-Rausch-Verhältnis im Bild. Allerdings wird die Probe während der Aufnahme aufgrund der höheren Strahlenbelastung stärker ausgebleicht.

Das Spektrum der Bleichraten ist bei den unterschiedlichen Farbstoffen sehr weit gefächert - abhängig von der Umgebung der Moleküle - und kann bei festen Präparaten durch Anti-Bleichmittel um ein Vielfaches reduziert werden. Die Bleichrate von Fluorescein stellt einen typischen mittleren Wert dar.

Abschließend sei ganz besonders hervorgehoben, dass die voranstehend genannten Verfahrensschritte und Ausführungsbeispiele bevorzugte Ausgestaltungen darstellen, die erfindungsgemäße Lehre jedoch nicht auf diese Ausführungen des beanspruchten Verfahrens einschränken.

**Patentansprüche**

1. Verfahren zur Einstellung der Systemparameter eines konfokalen Laserscanmikroskops, wobei die Einstellung der Systemparameter über einen Steuercomputer erfolgt,
   **gekennzeichnet durch** die folgenden Schritte:

   a) Darstellen einer Benutzerführung im Dialog mit den Benutzer;

   b) Eingeben **durch** den Benutzer von mindestens einem Objektparameter, mindestens einem auswählbaren Systemparameter und mindestens einer definierbaren, die Bildaufnahme betreffenden, Problemstellung;

   c) Vorschlagen von, weiteren die Bildaufnahme betreffenden Systemparametern, von Optimierungspfaden und Aufnahmestrategien, wobei das Vorschlagen in Abhängigkeit von dem mindestens einem Objektparameter, dem mindestens einem auswählbaren Systemparameter und der mindestens einen definierbaren, die Bildaufnahme betreffenden, Problemstellung erfolgt;

   d) Auswählen eines Vorschlags **durch** den Benutzer; und

   e) automatisches Einstellen der Systemparameter einer ausgewählten Systemeinstellung oder Aufnahmestrategie.

2. Verfahren nach Anspruch 1, **dadurch gekennzeichnet, dass** das Eingeben oder Vorschlagen mindestens, die aufzunehmende Objektdimension, den aufzunehmenden Objektbereich, die Anzahl der optischen Schnitte, die aufzunehmende Objekteigenschaft und die Nachweismethode bestimmt.

**3.** Verfahren nach Anspruch 2, **dadurch gekennzeichnet, dass** es sich bei der Nachweismethode alternativ um die Anwendung eines Fluoreszenzverfahrens und eines Reflexionsverfahrens handelt.

**4.** Verfahren nach Anspruch 1, **dadurch gekennzeichnet, dass** der Schritt des Vorschlages die Verwendung eines geeigneten Objektivs mit möglichst hoher numerischer Apertur zur Erzielung maximaler Auflösung betrifft, dass dem Benutzer die mit dem ausgewählten Objektiv maximal erzielbare Auflösung, und die unter Zugrundelegung bestimmter und bereits eingestellter Systemparameter die aktuelle Auflösung mitgeteilt wird, und dass dem Benutzer die Anzahl der Pixel pro Bildebene vorgeschlagen wird

**5.** Verfahren nach Anspruch 2, **dadurch gekennzeichnet, dass** die zu bestimmende Objekteigenschaft zur Ermittlung der optimalen Bestrahlungsstärke dient, und dass die optimale Bestrahlungsstärke dem Benutzer vorgeschlagen wird.

**6.** Verfahren nach Anspruch 1, **dadurch gekennzeichnet, dass** zur Einstellung eines Detektionspinhole-Durchmessers dem Benutzer ein optimierter Wert vorgeschlagen wird, bei dem die Auflösung der Bildaufnahme bei noch brauchbarem Signal-zu-Rausch-Verhältnis der Bildaufnahme maximal ist.

**7.** Verfahren nach Anspruch 1, **dadurch gekennzeichnet, dass** das Darstellen der Benutzerführung bei Auswahl mindestens eines Systemparameters alle diejenigen Systemparameter für den Benutzer dargestellt werden, die durch die Auswahl beeinflusst werden und ebenfalls dem Benutzer mitgeteilt wird, wie unter Zugrundelegung der Auswahl eines Systemparameters eine Bildaufnahme mit bestmöglicher Qualität realisierbar ist.

**8.** Verfahren nach Anspruch 1, **dadurch gekennzeichnet, dass** mittels der Benutzerführung Hilfestellungen oder Lösungen für vorgegebene Problemsituationen angeboten werden.

**9.** Verfahren nach Anspruch 8, **dadurch gekennzeichnet, dass** es sich bei den Problemsituationen um die Probleme:

- "die Probe bleicht zu stark (bei Fluoreszenzobjekten)" und/oder

- "die Bilddaten sind verrauscht" und/oder

- "die Messzeit ist zu lange" und/oder

- "die Auflösung ist zu gering"

handelt.

**10.** Verfahren nach Anspruch 1, **dadurch gekennzeichnet, dass** die zumindest teilweise voneinander abhängigen Systemparameter mittels Algorithmus bestimmt werden.

**11.** Verfahren nach Anspruch 1, **dadurch gekennzeichnet, dass** die Systemparameter unter Berücksichtigung der Vorgaben aus einem in einer Datenbank abgelegten Expertensystem abgerufen werden.

**12.** Verfahren nach Anspruch 1, **dadurch gekennzeichnet, dass** die Systemparameter unter Berücksichtigung der Vorgaben unter Verwendung von Fuzzy-Logic ermittelt und nach Auswahl oder automatisch eingestellt werden.

**13.** Verfahren nach Anspruch 1, **dadurch gekennzeichnet, dass** das Darstellen einer Benutzerführung für den Benutzer ein aktivierbares und führendes Lemprogramm zur optimalen - vorzugsweise objekt- und/oder problemspezifischen - Systemeinstellung und/oder Aufnahmestrategie umfasst.

## Claims

**1.** Method for setting the system parameters of a confocal laser scanning microscope, the setting of the system parameters being performed via a control computer, **characterized by** the following steps:

  a) displaying a user guide in dialogue with the user;

  b) inputting by the user of at least one object parameter, at least one selectable system parameter and at least one definable problem formulation relating to the image recording;

  c) proposing further system parameters, relating to image recording, optimization paths and recording strategies, the proposal being performed as a function of the at least one object parameter, the at least one selectable system parameter and the at least one definable problem formulation relating to image recording;

  d) selection of a proposal by the user; and

  e) automatically setting the system parameters of a selected system setting or recording strategy.

**2.** Method according to Claim 1, **characterized in that** inputting or proposing determines at least the object dimension to be recorded, the object region to be recorded, the number of the optical steps, the object property to be recorded and the verification method.

**3.** Method according to Claim 2, **characterized in that** the verification method is alternatively the use of a fluorescence method and a reflection method.

**4.** Method according to Claim 1, **characterized in that** the step of proposing relates to the use of a suitable objective with the highest possible numerical aperture for receiving maximum resolution, **in that** the user is informed of the maximum resolution achievable with the selected objective, and of the current resolution, on the basis of specific system parameters already set, and **in that** the number of pixels per image plane is proposed to the user.

**5.** Method according to Claim 2, **characterized in that** the object property to be determined serves the purpose of ascertaining the optimum irradiation intensity and **in that** the optimal irradiation intensity is proposed to the user.

**6.** Method according to Claim 1, **characterized in that** in order to set a detection pinhole diameter, the user is proposed an optimized value for which the resolution of the image recording is a maximum in conjunction with a still useable signal-to-noise ratio of the image recording.

**7.** Method according to Claim 1, **characterized in that** in the case of the selection of at least one system parameter the user guide displays to the user all those system parameters which are influenced by the selection, and the user is also informed as to how it is possible to implement image recording with the best possible quality on the basis of the selection of a system parameter.

**8.** Method according to Claim 1, **characterized in that** aids or solutions for prescribed problem situations are offered by means of the user guide.

**9.** Method according to Claim 8, **characterized in that** the problem situations are the following problems:

- "the sample is too strongly bleached (in the case of fluorescence objects)" and/or
- "the image data are noisy" and/or
- "the measuring time is too long" and/or
- "the resolution is too low".

**10.** Method according to Claim 1, **characterized in that** the at least partially mutually dependent system parameters are determined by means of an algorithm.

**11.** Method according to Claim 1, **characterized in that** the system parameters are fetched, taking account of the stipulations, from an expert system installed in the database.

**12.** Method according to Claim 1, **characterized in that** the system parameters are ascertained, taking account of the stipulations, by using fuzzy logic, and are set automatically after selection.

**13.** Method according to Claim 1, **characterized in that** the display of a user guide for the user comprises an activatable and guided learning programme for the optimal - preferably object- and/or problem-specific - system setting and/or recording strategy.

**Revendications**

**1.** Procédé de mise au point des paramètres système d'un microscope à balayage laser à foyer commun, la mise au point des paramètres système se faisant par ordinateur pilote, **caractérisé par** les opérations suivantes :

a) représentation d'un guidage utilisateur en dialogue avec l'utilisateur ;

b) introduction par l'utilisateur d'au moins un paramètre objet, d'au moins un paramètre système sélectionnable et d'au moins un énoncé de problème définissable, concernant la saisie de l'image ;

c) proposition d'autres paramètres système concernant la saisie de l'image, de voies d'optimisation et de stratégies de saisie, la proposition se faisant en fonction de l'au moins un paramètre objet, de l'au moins un paramètre système sélectionnable et de l'au moins un énoncé de problème définissable, concernant la saisie de l'image ;

d) sélection d'une proposition par l'utilisateur ; et

e) mise au point automatique des paramètres système d'un réglage système ou stratégie de saisie sélectionné.

**2.** Procédé suivant la revendication 1, **caractérisé en ce que** l'introduction ou la proposition détermine au moins la dimension de l'objet à saisir, le domaine de l'objet à saisir, le nombre des sections optiques, la propriété de l'objet à saisir et la méthode d'identification.

**3.** Procédé suivant la revendication 2, **caractérisé en**

**ce que** la méthode d'identification est alternativement l'application d'un procédé de fluorescence et d'un procédé de réflexion.

4. Procédé suivant la revendication 1, **caractérisé en ce que** l'opération de proposition concerne l'utilisation d'un objectif approprié ayant l'ouverture numérique la plus élevée possible pour atteindre une résolution maximum, **en ce que** la résolution maximum pouvant être atteinte avec l'objectif sélectionné et la résolution actuelle sur la base de paramètres système déterminés et déjà réglés sont communiquées à l'utilisateur, et **en ce que** le nombre de pixels par unité d'image est proposé à l'utilisateur.

5. Procédé suivant la revendication 2, **caractérisé en ce que** la propriété d'objet à déterminer sert à calculer l'intensité d'irradiation optimale, et **en ce que** l'intensité d'irradiation optimale est proposée à l'utilisateur.

6. Procédé suivant la revendication 1, **caractérisé en ce qu'**en vue de la mise au point d'un diamètre de trou de détection, une valeur optimalisée est proposée à l'utilisateur dans laquelle la résolution de la saisie de l'image avec un rapport signal à bruit encore utilisable de la saisie de l'image est maximum.

7. Procédé suivant la revendication 1, **caractérisé en ce que** la représentation du guidage utilisateur faite lors de la sélection d'au moins un paramètre système, tous les paramètres système qui sont influencés par la sélection sont représentés à l'utilisateur, et **en ce qu'**il est également communiqué à l'utilisateur comment une saisie d'image de la meilleure qualité possible peut être réalisée sur la base de la sélection d'un paramètre système.

8. Procédé suivant la revendication 1, **caractérisé en ce qu'**au moyen du guidage utilisateur, des aides ou des solutions sont proposées pour des situations problématiques prédéfinies.

9. Procédé suivant la revendication 8, **caractérisé en ce que** les situations problématiques sont les problèmes :

   - « l'échantillon se décolore trop vite (en cas d'objets fluorescents) » et/ou

   - « les données-image sont bruiteuses » et/ou

   - « le temps de mesure est trop long » et/ou

   - « la résolution est trop faible ».

10. Procédé suivant la revendication 1, **caractérisé en**

**ce que** les paramètres système, dépendant les uns des autres du moins en partie, sont déterminés par algorithme.

11. Procédé suivant la revendication 1, **caractérisé en ce que** les paramètres système peuvent être appelés en tenant compte des prédéfinitions d'un système expert déposé dans une banque de données.

12. Procédé suivant la revendication 1, **caractérisé en ce que** les paramètres système sont calculés en tenant compte des prédéfinitions et en utilisant la logique floue, et mis au point après sélection ou automatiquement.

13. Procédé suivant la revendication 1, **caractérisé en ce que** la représentation d'un guidage utilisateur destiné à l'utilisateur comprend un programme d'apprentissage activable et directif en vue d'une mise au point du système et/ou stratégie de saisie optimale - de préférence orientée objet et/ou problème.

maximale
Aufnahmegeschwindigk
eit

**maximale
Auflösung**

**maximale
Helligkeit**

# Fig. 1

EP 1 131 664 B1

Start Systemprogramm

Objektdimension

Benutzereingabe

Eigenschaften der Fluorochrome

Benutzereingabe

Optimale Bestrahlungsstärke im Fokus

Maximaler Abbildungsmaßstab und minimaler Arbeitsabstand des Objektivs

Objektivauswahl

Benutzereingabe

Weitgehend durch Probe bestimmt

**Numerische Apertur des Objektivs und**

Optimale Laserleistung

**Gewünschte axiale Auflösung**

Benutzereingabe

Zahl der Ebenen, Pinholeeinstellung => Laterale Auflösung, Quanteneff. => Zahl der Pixel pro Ebene

Weitgehend vom Benutzer wählbare Präferenzen

**Bleichverhalten der Probe**

Maximales S/N

Gewähltes S/N

Benutzereingabe

Aufnahmezeit
Einstellung PMT Spannung

**Fig. 2**

12